(19) Europäisches Patentamt
European Patent Office
Office européen des brevets

(11) **EP 2 506 246 A1**

(12) **EUROPEAN PATENT APPLICATION**

(43) Date of publication:
**03.10.2012 Bulletin 2012/40**

(51) Int Cl.:
***G09G 3/36*** *(2006.01)*

(21) Application number: **11186349.4**

(22) Date of filing: **24.10.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **01.04.2011 KR 20110030323**

(71) Applicant: **LG Display Co., Ltd.**
**Seoul 150-721 (KR)**

(72) Inventors:
• **Kim, Hongjae**
**410-720 Goyang-si (KR)**
• **Choi, Hyunchul**
**702-903 Daegu (KR)**

(74) Representative: **Viering, Jentschura & Partner**
**Am Brauhaus 8**
**01099 Dresden (DE)**

(54) **Liquid crystal display**

(57)  A liquid crystal display is provided. The liquid crystal display comprises: a liquid crystal display panel (10) comprising data lines (D) formed in a line direction, gate lines (G) formed in a column direction intersecting the line direction, and a plurality of pixels disposed in a matrix form in a cell area defined by the data lines (D) and the gate lines (G); a data driving circuit (120) for supplying a data voltage to the data lines (D); and a gate driving circuit (110) for sequentially supplying gate pulses to the gate lines (G), wherein each of the pixels comprises subpixels, and a length of a column direction of each of the subpixels is longer than that of a line direction of each of the subpixels, at least two subpixels of the subpixels share one gate line (G), and the at least two subpixels charge a data voltage.

**FIG. 3**

EP 2 506 246 A1

## Description

This application claims the benefit of Korea Patent Application No. 10-2011-0030323 filed on April 1, 2011, the entire contents of which is incorporated herein by reference for all purposes as if fully set forth herein.

## BACKGROUND

### FIELD

The invention relates to a liquid crystal display.

### Related Art

A liquid crystal display of an active matrix driving method displays a moving picture using a thin film transistor (hereinafter, referred to as a "TFT") as a switching element. The liquid crystal display can be formed in a small size, compared with a cathode ray tube (CRT) and can be thus used as a display in a portable information device, a business machine, a computer, and a television. Therefore, the liquid crystal display quickly replaces a CRT.

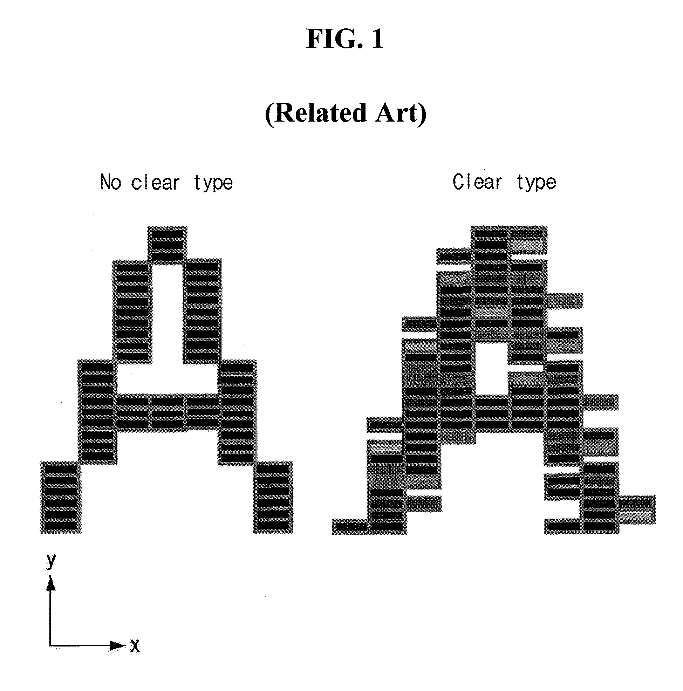

With development of a driving method and a manufacturing process, the liquid crystal display greatly improves a production cost and a picture quality. Nowadays, by embodying a pixel disposition of a liquid crystal display as a pixel disposition shown in FIG. 1, triple rate driving (TRD) technology in which the number of source drive ICs is reduced to 1/2 to 1/3 and thus a production cost is reduced has been suggested.

FIG. 1 illustrates an experimental result in which "A" is displayed by applying a clear type to a related art TRD liquid crystal display. The clear type is font rendering technology of Microsoft Windows and improves a shape of a character string with a specific method on a computer display screen. As shown in FIG. 1, a related art TRD liquid crystal display includes subpixels which further elongate in a line direction (i.e., x-axis direction) than a column direction (i.e., y-axis direction). Namely, a length of the subpixel in the line direction is longer than a length of the subpixel in the column direction. Thereby, there is a problem that in the related art TRD liquid crystal display, readability of a clear type character is deteriorated by 30% or more, compared with a liquid crystal display including sub pixels which further elongate in the column direction than in the line direction. Therefore, the related art TRD liquid crystal display is not applied to a commercial product due to low character readability in a clear type. However, according to a cost cutting request for a liquid crystal display panel of set maker companies, in order to reduce a production cost, a method of reducing the number of source drive ICs has been continuously requested.

## SUMMARY

The present invention relates to a liquid crystal display. One object of the present invention is to liquid crystal display which can reduce the number of source drive ICs and reduce a cost and improve readability of a clear type character.

Additional advantages, objects, and features of the disclosure will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose according to one aspect, a liquid crystal display comprises: a liquid crystal display panel comprising data lines formed in a line direction, gate lines formed in a column direction intersecting the line direction, and a plurality of pixels disposed in a matrix form in a cell area defined by the data lines and the gate lines; a data driving circuit for supplying a data voltage to the data lines; and a gate driving circuit for sequentially supplying gate pulses to the gate lines, wherein each of the pixels comprises subpixels, and a length of each of the subpixels in a column direction is greater than a length of each of the subpixels in a line direction, at least two subpixels of the subpixels share one gate line, and the at least two subpixels simultaneously charge a data voltage in response to a gate pulse from the one gate line.

In another aspect, a liquid crystal display comprises: a liquid crystal display panel comprising data lines formed in a line direction, gate lines formed in a column direction intersecting the line direction, and a plurality of pixels disposed in a matrix form in a cell area defined by the data lines and the gate lines; a data driving circuit for supplying a data voltage to the data lines; and a gate driving circuit for sequentially supplying gate pulses to the gate lines, wherein each of the pixels comprises subpixels, and a length of each of the subpixels in a line direction is greater than a length of each of the subpixels in a column direction, at least two subpixels of the subpixels share one gate line, and the at least two subpixels charge a data voltage supplied in a time division manner through the one data line.

## BRIEF DESCRIPTION OF THE DRAWINGS

The accompanying drawings, which are comprised to provide a further understanding of the invention and are incorporated in and constitute a part of this specification, illustrate embodiments of the invention and together with the description serve to explain the principles of the invention. In the drawings:

FIG. 1 is a diagram illustrating an experimental result that displays a character in a clear type in a related art TRD liquid crystal display;

FIG. 2 is a block diagram illustrating a liquid crystal display according to an embodiment of the invention;

FIG. 3 is an equivalent circuit diagram illustrating a portion of pixel array according to a first embodiment of the invention;

FIG. 4 is a waveform diagram illustrating a data voltage and a gate pulse for embodying dot inversion of FIG. 3;

FIG. 5 is a table illustrating an experimental result that displays a character in a clear type in a liquid crystal display having pixel array according to a first embodiment of the invention and the related art;

FIG. 6 is an equivalent circuit diagram illustrating a portion of pixel array according to a second embodiment of the invention;

FIG. 7 is a waveform diagram illustrating a data voltage and a gate pulse for embodying vertical two dot inversion of FIG. 6;

FIG. 8 is an equivalent circuit diagram illustrating a portion of pixel array according to a third embodiment of the invention; and

FIG. 9 is a waveform diagram illustrating a data voltage and a gate pulse for embodying vertical two dot inversion of FIG. 8.

## DETAILED DESCRIPTION

The invention will be described more fully hereinafter with reference to the accompanying drawings, in which example embodiments of the inventions are shown. This invention may, however, be embodied in many different forms and should not be construed as limited to the embodiments set forth herein. Like reference numerals designate like elements throughout the specification. In the following description, if it is decided that the detailed description of known function or configuration related to the invention makes the subject matter of the invention unclear, the detailed description is omitted.

Names of elements used in the following description may be selected in consideration of facility of specification preparation. Thus, the names of the elements may be different from names of elements used in a real product.

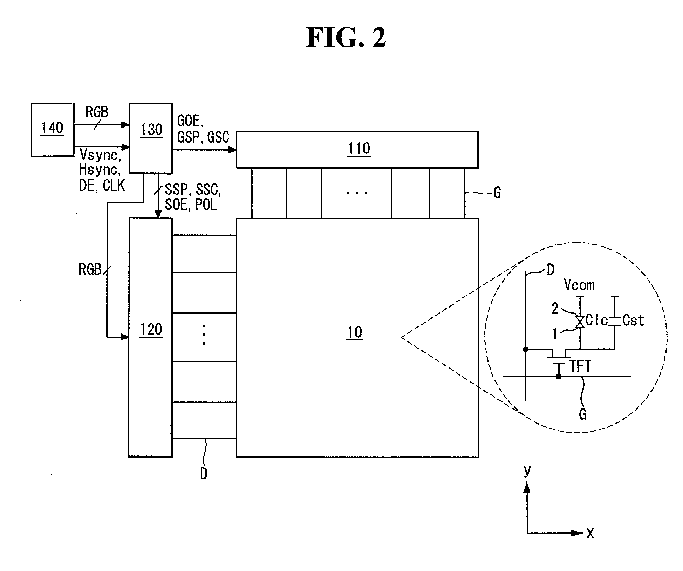

FIG. 2 is a block diagram illustrating a liquid crystal display according to an embodiment of the invention. Referring to FIG. 2, a liquid crystal display according to the embodiment of the invention includes a liquid crystal display panel 10, a gate driving circuit 110, a data driving circuit 120, and a timing controller 130. The data driving circuit 120 includes a plurality of source drive ICs.

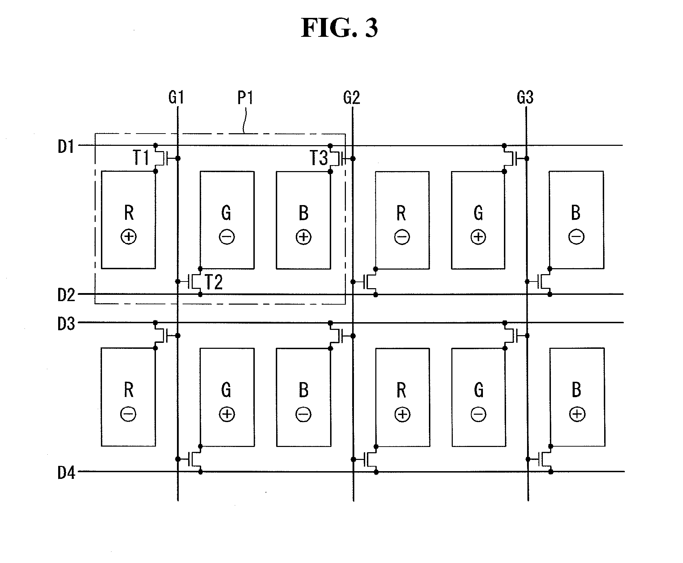

In the liquid crystal display panel 10, a liquid crystal layer is formed between two substrates. The liquid crystal display panel 10 includes pixels disposed in a cell area formed in a matrix by a crossing structure of data lines D and gate lines G. A pixel disposition of the liquid crystal display panel 10 can be embodied in a form of FIGS. 3, 6, and 8.

In a lower substrate of the liquid crystal display panel 10, data lines D, gate lines G intersecting the data lines D, a thin film transistor (hereinafter, referred to as a 'TFT'), in general, any type of switch, e.g. implemented as a transistor, e.g. as a field effect transistor, e.g. as a thin film field effect transistor, formed at an intersection of the data lines D and the gate lines G, a pixel electrode 1 of a liquid crystal cell Clc connected to the TFT, and a storage capacitor Cst connected to the pixel electrode 1 are formed. The data lines D are formed in a line direction (i.e., x-axis direction), and the gate lines G are formed in a column direction (i.e., y-axis direction) intersecting the line direction.

The liquid crystal cells Clc are connected to the TFT to be driven by an electric field between the pixel electrodes 1 and a common electrode 2. A common voltage Vcom is supplied to the common electrode 2. The common electrode 2 is formed in a lower substrate and/or an upper substrate. A black matrix and a color filter, etc., are formed in the upper substrate of the liquid crystal display panel 10. A polarizing plate is attached to each of the lower substrate and the upper substrate of the liquid crystal display panel 10. In each of the lower substrate and the upper substrate, an alignment layer for setting a pre-tilt angle of liquid crystal molecules is formed in a surface contacting with a liquid crystal layer.

The liquid crystal display panel 10 is embodied with a vertical electric field driving method such as a twisted nematic (TN) mode and a vertical alignment (VA) mode or with a horizontal electric field driving method such as an in plane switching (IPS) mode and a fringe field switching (FFS) mode. A liquid crystal display according to the invention can be embodied in any form of a transmissive liquid crystal display, a transflective liquid crystal display, and a reflective liquid crystal display. In the transmissive liquid crystal display and the transflective liquid crystal display, a backlight unit is necessary. The backlight unit can be embodied as a direct type backlight unit or an edge type backlight unit.

The timing controller 130 supplies digital video data RGB input from a host system 140 to the data driving circuit 120. The timing controller 130 receives a timing signal such as a vertical synchronous signal Vsync, a horizontal synchronous signal Hsync, a data enable signal DE, and a dot clock CLK from the host system 140 and generates timing control signals for controlling operation timing of the data driving circuit 120 and the gate driving circuit 110. The timing control signals comprise a gate timing control signal for controlling an operation time of the gate driving circuit 110 and a data timing control signal for controlling polarity of a data voltage and operation timing of the data driving circuit 120.

The gate timing control signal includes a gate start pulse GSP, a gate shift clock GSC, a gate output enable signal GOE, etc. The gate start pulse GSP controls timing of a first gate pulse. The gate shift clock GSC is a clock signal for shifting the gate start pulse. The gate output enable signal GOE controls output timing of the gate driving circuit 110.

The data timing control signal includes a source start pulse SSP, a source sampling clock SSC, a polarity control signal POL, and a source output enable signal SOE, etc. The source start pulse SSP controls data sampling start timing of the data driving circuit 120. The source sampling clock SSC is a clock signal for controlling sampling timing of data at each of source drive ICs based on a rising or falling edge. The source output enable signal SOE controls output timing of the data driving circuit 120. The polarity control signal POL instructs polarity inversion timing of a data voltage output from the data driving circuit 120.

The data driving circuit 120 latches digital video data RGB input from the timing controller 130 in response to a data timing control signal. The data driving circuit 120 converts digital video data RGB into an analog data voltage of positive polarity/negative polarity according to a gamma compensation voltage of positive polarity/negative polarity in response to a polarity control signal POL. An analog data voltage output from the data driving circuit 120 is supplied to data lines D. Source drive ICs of the data driving circuit 120 are connected to data lines D of the liquid crystal display panel 10 with a chip on glass (COG) process or a tape automated bonding (TAB) process.

The gate driving circuit 110 sequentially supplies gate pulses synchronized with a data voltage to gate lines G in response to gate timing control signals. The gate driving circuit 110 includes a shift register for sequentially shifting and outputting gate start pulse GSP supplied from the timing controller 130 according to a gate shift clock GSC, a level shifter for converting an output of the shift register to a swing width appropriate for driving a thin film transistor of a pixel, an output buffer, etc. The gate driving circuit is attached to the display panel 10 with a TAB method or is formed on a lower substrate of the display panel 10 with a gate drive IC in panel (GIP) method. In the GIP method, the level shifter is mounted on a printed circuit board (PCB), and the shift register is formed on the lower substrate of the display panel 10.

The host system 140 includes a system on chip having a scaler therein and converts digital video data RGB input from an external video source device to a data format of a resolution appropriate for displaying in the display panel 10. The host system 140 supplies digital video data RGB to the timing controller 130 through a low voltage differential signaling (LVDS) interface, a transition minimized differential signaling (TMDS) interface, etc.

FIG. 3 is an equivalent circuit diagram illustrating a portion of pixel array according to a first embodiment of the invention. Referring to FIG. 3, data lines D1 to D4 are formed in a line direction (e.g. x-axis direction), and gate lines G1 to G3 are formed in a column direction (e.g. y-axis direction). Each of pixels of the display panel 10 includes a red subpixel R, a green subpixel G, and a blue subpixel B. Subpixels of each pixel of the display panel 10 are disposed parallel in a line direction. That is, each of pixels of the display panel 10 is disposed parallel in a line direction in order of a red subpixel R, a green subpixel G, and a blue subpixel B, as shown in FIG. 3.

Subpixels of the same color are disposed parallel in a column direction. The red subpixels R are disposed parallel in a column direction in a (3i-2)nd (i is a natural number) column. The green subpixels G are disposed parallel in a column direction in a (3i-1)st column. The blue subpixels B are disposed parallel in a column direction in a 3i-th column. However, a disposition of the red subpixels R, the green subpixels G, and the blue subpixels B is not limited thereto and can be changed within a range that can be changed by those skilled in the art. Further, a column direction length of each of the red subpixels R, the green subpixels G, and the blue subpixels B is formed longer than a line direction length.

At least two subpixels of a red subpixel R, a green subpixel G, and a blue subpixel B of each of pixels share one gate line. That is, each of subpixels disposed at an odd number column and each of subpixels disposed at an even number column adjacent in a line direction share a gate line existing therebetween. As shown in FIG. 3, each of red subpixels R of a first column and each of green subpixels G of a second column adjacent in a line direction share a first gate line G1 existing therebetween, and each of blue subpixels B of a third column and each of red subpixels R of a fourth column adjacent in a line direction share a second gate line G2 existing therebetween.

Further, at least two subpixels of a red subpixel R, a green subpixel G, and a blue subpixel B of each of pixels simultaneously charge a data voltage in response to a gate pulse from one gate line. Hereinafter, a connection structure of a first pixel P1, a gate line, and a data line and data voltage supply will be described with reference to FIG. 3.

A TFT connected to a pixel electrode of a red subpixel R of the first pixel P1 is defined as a first TFT T1, a TFT connected to a pixel electrode of a green subpixel G thereof is defined as a second TFT T2, and a TFT connected to a pixel electrode of a blue subpixel B thereof is defined as a third TFT T3. The first TFT T1 supplies a red data voltage from a first data line D1 to a pixel electrode of a red subpixel R in response to a first gate pulse GP1 from the first gate line G1. A gate electrode of the first TFT T1 is connected to the first gate line G1, and a source electrode thereof is connected to a pixel electrode of the red subpixel R, and a drain electrode thereof is connected to the first data line D1. The second TFT T2 supplies a green data voltage from a second data line D2 to a pixel electrode of a green subpixel G in response to the first gate pulse GP1 from the first gate line G1. A gate electrode of the second TFT T2 is connected to the first gate line G1, a source electrode thereof is connected to a pixel electrode of a green subpixel G, and a drain electrode thereof is connected to the second data line D2. The third TFT T3 supplies a blue data voltage from the first data line D1 to a pixel electrode of a blue subpixel B in response to a second gate pulse GP2 from the second gate line G2. A gate electrode of the third TFT T3 is connected to the second gate line G2, a source electrode thereof is connected to a pixel electrode of the blue subpixel B, and a drain electrode thereof is connected to the first data line D1.

Finally, in a liquid crystal display including pixel array according to the first embodiment of the invention, because data lines D are formed in a line direction (x-axis direction), the number of source drive ICs can be reduced. For example, in a liquid crystal display of 1366x738 resolution, in case of a liquid crystal display in which data lines D are formed in a column direction (y-axis direction), 4098 (1366x3) data lines D are formed, and in order to control 4098 data lines D, at least three source drive ICs are necessary. However, in a liquid crystal display according to the invention in which data lines D are formed in a line direction (x-axis direction), because 1536 (738x2) data lines D are formed, 1536 data lines D can be fully controlled with only one or two source drive ICs. Therefore, in a liquid crystal display according to the first embodiment of the invention, because the number of source drive ICs can be reduced, a cost can be reduced.

Further, in the first embodiment of the invention, because subpixels of an odd number column and subpixels of an even number column share a gate line G, the number of the gate lines G can be reduced. Therefore, in the first embodiment of the invention, by reducing the number of gate lines G, complexity of a process can be lowered and a frequency of the gate driving circuit 110 can be reduced. Further, in the first embodiment of the invention, as the number of gate lines G is reduced, an aperture ratio of the pixel increases.

Further, in the first embodiment of the invention, data lines D are formed in a line direction, gate lines G are formed in a column direction, and a column direction length of each of subpixels is formed longer than a line direction length thereof. Parasitic capacitance Cdp exists between a data line D and a pixel electrode of subpixels and is defined by Equation 1.

[Equation 1]

$$C_{dp} = \varepsilon \frac{s}{d}$$

In Equation 1, Cdp is parasitic capacitance existing between a data line D and a pixel electrode of subpixels, s is a sectional area, and d is a distance. The parasitic capacitance Cdp is proportional to a sectional area, as in Equation 1. In a liquid crystal display in which a long side of subpixels is formed adjacent to a data line, because a sectional area s of a pixel electrode of subpixels is large, a value of the parasitic capacitance Cdp increases. However, in the first embodiment of the invention, because a short side of subpixels is formed adjacent to a data line, a sectional area s of pixel electrode of subpixels can be reduced. That is, according to the first embodiment of the invention, parasitic capacitance Cdp existing between a data line and a pixel electrode of subpixels can be minimized.

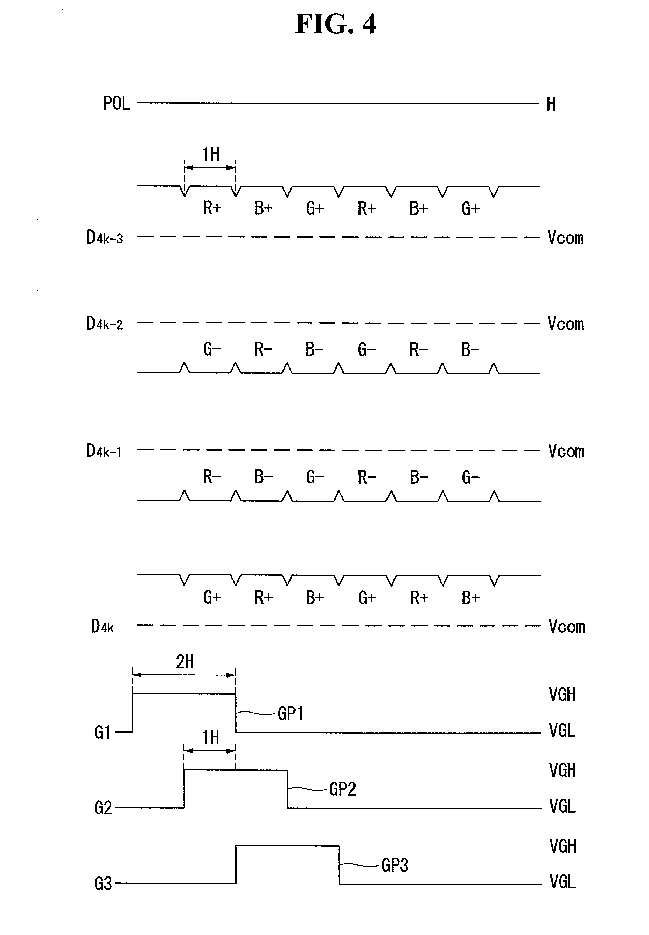

As shown in FIG. 3, pixel array according to the first embodiment of the invention is embodied with dot inversion in order to reduce deterioration and an afterimage of liquid crystal and power consumption. Hereinafter, dot inversion driving of pixel array according to the first embodiment of the invention will be described in detail with reference to FIG. 4.

FIG. 4 is a waveform diagram illustrating a data voltage and a gate pulse for embodying dot inversion of FIG. 3. FIG. 4 illustrates a polarity control signal POL for periodically inverting polarity of a data voltage supplied through data lines D, a waveform of a data voltage supplied to first to fourth data lines D1-D4, and a waveform of a gate pulse supplied to first to third gate lines G1-G3.

A source drive IC inverts polarity of a data voltage supplied to data lines D1-D4 in response to a polarity control signal POL per one frame. For example, a polarity control signal POL may be generated in a high level voltage H in an odd number frame period and in a low level voltage L in an even number frame period. FIG. 4 illustrates that a polarity control signal POL is generated in a high level voltage H.

The first and fourth data lines D1 and D4 supply positive polarity data voltages of a level higher than a common voltage Vcom as a direct current (DC) in an odd number frame period. The second and third data lines D2 and D3 supply negative polarity data voltages of a level lower than a common voltage Vcom as a DC in an odd number frame period. The first data line D1 is comprised in a (4k-3)rd (k is a natural number) data line, and the second data line D2 is comprised in a (4k-2)nd data line. The third data line D3 is comprised in a (4k-1) data line, and the fourth data line D4 is comprised in a 4k-th data line. For convenience of description, FIG. 4 illustrates the first to fourth data lines D1-D4.

The first and fourth data lines D1 and D4 supply negative polarity data voltages of a level lower than a common voltage Vcom as a DC in an even number frame period. The second and third data lines D2 and D3 supply positive polarity data voltages of a level higher than a common voltage Vcom as a DC in an even number frame period.

In order to compensate an insufficient pixel charge time, the gate driving circuit 110 sequentially supplies gate pulses having a pulse width more than two horizontal periods 2H to gate lines G1-G3. The gate pulses are overlapped by predetermined period. For example, the pulse width of gate pulse may be approximately two horizontal periods 2H. In this case, the gate pulses may be overlapped by approximately one horizontal period 1H. One horizontal period is one line scanning time in which data are written in pixels of one display line in the liquid crystal display panel 10. Each of subpixels precharges a data voltage for first one horizontal period of a gate pulse and charges a data voltage to display for next one horizontal period. Each of subpixels sustains a charged data voltage for one frame period. For example, as shown in FIG. 3, a blue subpixel B of the first pixel P1 precharges a red data voltage R+ for first one horizontal period of the second gate pulse GP2 of the second gate line G2 and charges a blue data voltage B+ to display for next one horizontal period charge.

Referring to FIGS. 3 and 4, polarity of data voltages simultaneously supplied to the first and fourth data lines D1 and D4 and the second and third data lines D2 and D3 is different. Polarity of data voltages simultaneously supplied to the first and fourth data lines D1 and D4 and the second and third data lines D2 and D3 is inverted in a cycle of one frame period. For an odd number frame period, a positive polarity data voltage is supplied to the first and fourth data lines D1 and D4 and a negative polarity data voltage is supplied to the second and third data lines D2 and D3. For an even number frame period, a positive polarity data voltage is supplied to the first and fourth data lines D1 and D4, and a negative polarity data voltage is supplied to the second and third data lines D2 and D3. As a result, pixel array of FIG. 3 is driven with dot inversion. The liquid crystal display according to the first embodiment of the invention can reduce deterioration and an afterimage of liquid crystal due to dot inversion driving.

Further, the liquid crystal display according to the first embodiment of the invention supplies data voltages as a DC to the first and fourth data lines D1 and D4 and the second and third data lines D2 and D3. As a result, the liquid crystal display according to the first embodiment of the invention can remarkably reduce power consumption P. The power consumption P is defined by Equation 2.

[Equation 2]

$$P = 2\pi f \times n \times C \times V^2$$

In Equation 2, P is power consumption, f is a frequency, n is the number of data lines, C is a capacitor, and V is an effective voltage. The power consumption P is proportional to a magnitude of the frequency f and the effective voltage V, and when driven with an AC, the frequency f increases, and when a positive polarity data voltage is transited to a negative polarity data voltage or when a negative polarity data voltage is transited to a positive polarity data voltage, the effective voltage V increases.

In a related art liquid crystal display, a data voltage of positive polarity and a data voltage of negative polarity swing about a common voltage Vcom per one horizontal period or two horizontal periods. A related art liquid crystal display has a high frequency f, and a magnitude of an effective voltage V thereof is from a negative polarity data voltage to a positive polarity data voltage. However, because the liquid crystal display according to the first embodiment of the invention performs DC driving in a cycle of one frame period, the liquid crystal display has a low frequency f, and a magnitude of an effective voltage V thereof is from a common voltage to a positive polarity or negative polarity data voltage, as shown in FIG. 4. That is, a magnitude of an effective voltage V of a liquid crystal display according to the embodiment of the invention corresponds to 50% of that of a related art liquid crystal display, and a frequency f thereof is remarkably lower than that of a related art liquid crystal display. Therefore, the liquid crystal display according to the embodiment of the invention can greatly reduce power consumption P, compared with a related art liquid crystal display.

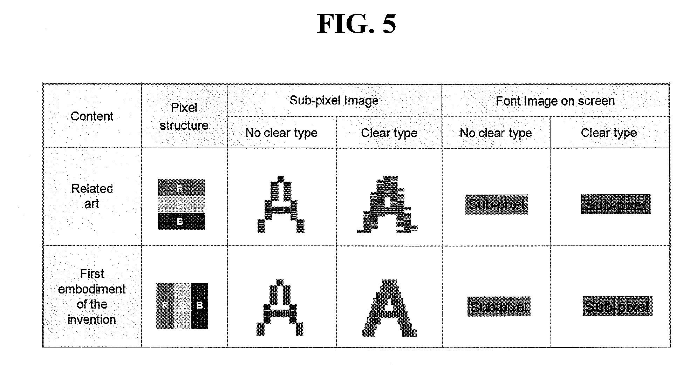

FIG. 5 is a table illustrating an experimental result that displays a character with a clear type in a liquid crystal display having pixel array according to the first embodiment of the invention and the related art. FIG. 5 illustrates the related art TRD technology in which subpixels of the same color further elongate in the line direction than the column direction and the first embodiment of the invention in which subpixels of the same color further elongate in the column direction than the line direction. A clear type is font rendering technology of Microsoft Windows and improves a shape of a character string with a specific method on a computer display screen.

In no clear font to which a clear type is not applied, both the related art TRD technology and the first embodiment of the invention display a subpixel image without a problem and display a clear character on a screen. However, when a clear type is applied, in the related art, a subpixel image is expressed with smeared and thus readability of a character on a screen is remarkably deteriorated. However, in the first embodiment of the invention, even if a clear type is applied, a subpixel image is displayed without a problem, or similarly to when a clear type is not applied. That is, in the first embodiment of the invention, a clear type font can be applied, and the number of source drive ICs can be reduced. Further, in second and third embodiment of the invention, when a clear type is applied, a character is more clearly displayed on a screen, compared with when a clear type is not applied.

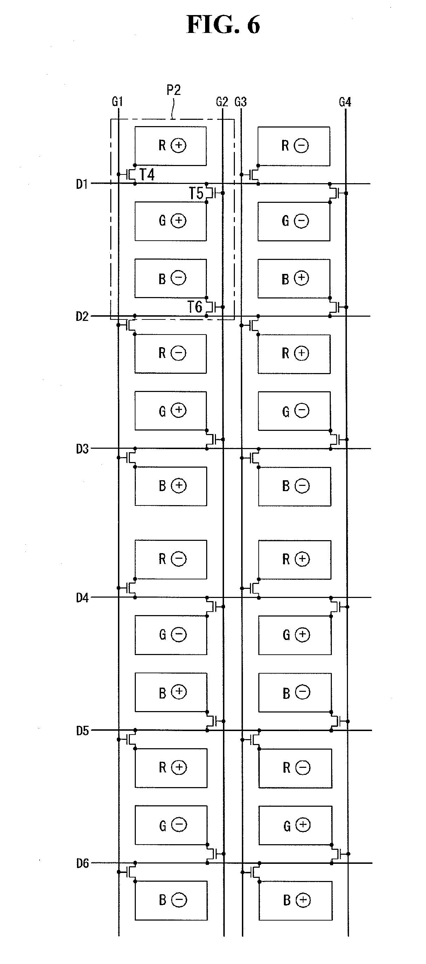

FIG. 6 is an equivalent circuit diagram illustrating a portion of pixel array according to a second embodiment of the invention. Referring to FIG. 6, data lines D1 to D4 are formed in a line direction (x-axis direction), and gate lines G1 to G3 are formed in a column direction (y-axis direction). Each of pixels of the display panel 10 includes a red subpixel R, a green subpixel G, and a blue subpixel B. Each of pixels of the display panel 10 is disposed parallel in a column direction in order of a red subpixel R, a green subpixel G, and a blue subpixel B, as shown in FIG. 6.

Subpixels of the same color are disposed parallel in a line direction. Red subpixels R are disposed parallel in a line direction in a (3p-2)nd (p is a natural number) line. Green subpixels G are disposed parallel in a line direction in a (3p-1)st line. Blue subpixels B are disposed parallel in a line direction in a 3p-th line. However, a disposition of red subpixels R, green subpixels G, and blue subpixels B is not limited thereto and can be changed within a range that can be changed by those skilled in the art. Further, a line direction length of each of the red subpixels R, the green subpixels G, and the blue subpixels B is formed longer than a column direction length.

At least two subpixels of the red subpixel R, the green subpixel G, and the blue subpixel B of each of pixels share one data line. More specifically, each of subpixels disposed at an odd number line and each of subpixels disposed at an even number line adjacent in a column direction share a data line existing therebetween. As shown in FIG. 6, each of red subpixels R of a first line and each of green subpixels G of a second line adjacent in a column direction share a first data line D1 existing therebetween. Each of blue subpixels B of a third line and each of red subpixels R of a fourth line adjacent in a column direction share a second data line D2 existing therebetween.

Further, at least two subpixels of a red subpixel R, a green subpixel G, and a blue subpixel B of each of pixels charge a data voltage supplied in a time division manner through one data line. Hereinafter, a connection structure of a second pixel P2, a gate line, and a data line and data voltage supply will be described with reference to FIG. 6.

A TFT connected to a pixel electrode of a red subpixel R of the second pixel P2 is defined as a fourth TFT T4, a TFT connected to a pixel electrode of a green subpixel G is defined as a fifth TFT T5, and a TFT connected to a pixel electrode of a blue subpixel B is defined as a sixth TFT T6. The fourth TFT T4 supplies a red data voltage from the first data line D1 to a pixel electrode of the red subpixel R in response to the first gate pulse GP1 from the first gate line G1. A gate electrode of the fourth TFT T4 is connected to the first gate line G1, and a source electrode thereof is connected to a pixel electrode of the red subpixel R, and a drain electrode thereof is connected to the first data line D1. The fifth TFT T5 supplies a green data voltage from the first data line D1 to a pixel electrode of a green subpixel G in response to the second gate pulse GP2 from the second gate line G2. A gate electrode of the fifth TFT T5 is connected to the second gate line G2, a source electrode thereof is connected to a pixel electrode of the green subpixel G, and a drain electrode thereof is connected to the first data line D1. The sixth TFT T6 supplies a blue data voltage from the second data line D2 to a pixel electrode of a blue subpixel B in response to the second gate pulse GP2 from the second gate line G2. A gate electrode of the sixth TFT T6 is connected to the second gate line G2, a source electrode thereof is connected to a pixel electrode of the blue subpixel B, and a drain electrode thereof is connected to the second data line D2.

Finally, in a liquid crystal display comprising pixel array according to the second embodiment of the invention, because data lines D are formed in a line direction (x-axis direction), the number of source drive ICs can be reduced. For example, in a liquid crystal display of 1366x738 resolution, in case of a liquid crystal display in which data lines D are formed in a column direction (y-axis direction), 4098 (1366x3) data lines D are formed, and in order to control 4098 data lines D, at least 3 source drive ICs are necessary. However, in a liquid crystal display according to the invention in which data lines D are formed in a line direction (x-axis direction), because subpixels of an odd number line and subpixels of an even number line share a data line D, 1152 (738x3/2) data lines are formed. Therefore, a liquid crystal display according to the second embodiment of the invention can fully control 1152 data lines D with only one or two source drive ICs. Therefore, in a liquid crystal display according to the second embodiment of the invention, because the number of source drive ICs can be reduced, a cost can be reduced.

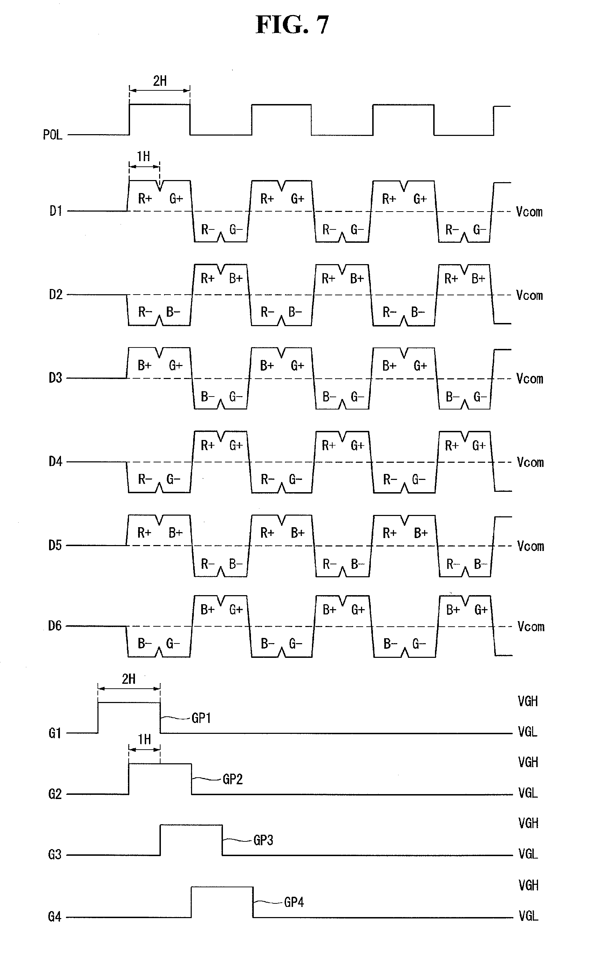

In order to reduce deterioration and an afterimage of liquid crystal and to reduce power consumption, pixel array according to the second embodiment of the invention is embodied with vertical two dot inversion, as shown in FIG. 6. Hereinafter, vertical two dot inversion driving of pixel array according to the second embodiment of the invention will be described in detail with reference to FIG. 7.

FIG. 7 is a waveform diagram illustrating a data voltage and a gate pulse for embodying vertical two dot inversion of FIG. 6. FIG. 7 illustrates a polarity control signal POL for periodically inverting polarity of a data voltage supplied through data lines D, a waveform of a data voltage supplied to first to sixth data lines D1-D6, and a waveform of a gate pulse supplied to first to fourth gate lines G1-G4.

A source drive IC inverts polarity of a data voltage supplied to the data lines D1-D6 in response to a polarity control signal POL per one frame. Further, the polarity control signal POL is inverted in a cycle of two horizontal periods. In order to embody vertical two dot inversion, the source drive IC supplies data voltages so that swing of a data voltage supplied to odd number data lines such as first, third, and fifth data lines D1 D3, and D5 and swing of a data voltage supplied to even number data lines such as second, fourth, and sixth data lines D2, D4, and D6 are opposite.

In order to compensate an insufficient pixel charge time, the gate driving circuit 110 sequentially supplies gate pulses having a pulse width more than two horizontal periods 2H to the gate lines G1-G4. The gate pulses are overlapped by predetermined period. For example, the pulse width of gate pulse may be approximately two horizontal periods 2H. In this case, the gate pulses may be overlapped by approximately one horizontal period 1H. One horizontal period is one line scanning time in which data are written in pixels of one display line in the liquid crystal display panel 10. Each of subpixels precharges a data voltage for first one horizontal period of a gate pulse and charges a data voltage to display for next one horizontal period. Each of subpixels sustains a charged data voltage for one frame period. For example, as shown in FIG. 6, a green subpixel G of the second pixel P2 precharges a red data voltage R+ for first one horizontal period of a second gate pulse GP2 of the second gate line G2 and charges a green data voltage G+ to display for next one horizontal period. Further, a blue subpixel B of the second pixel P2 precharges a red data voltage R- for first one horizontal period of the second gate pulse GP2 of the second gate line G2 and charges a blue data voltage B- to display for next one horizontal period.

Referring to FIGS. 6 and 7, polarity of data voltages simultaneously supplied to odd number data lines such as the first, third, and fifth data lines D1, D3, and D5 and even number data lines such as the second, fourth, and sixth data lines D2, D4, and D6 is different. A data voltage supplied to odd number and even number data lines swings between a positive polarity data voltage and a negative polarity data voltage per predetermined period. In the second embodiment of the invention, the predetermined period is illustrated as two horizontal periods. Polarity of data voltages simultaneously supplied to odd number data lines such as the first, third, and fifth data lines D1, D3, and D5 and even number data lines such as the second, fourth, and sixth data lines D2, D4, and D6 is inverted in a cycle of one frame period. As a result, pixel array of FIG. 6 is driven with vertical two dot inversion. The liquid crystal display according to second embodiment of the invention can reduce deterioration and an afterimage of liquid crystal due to vertical two dot inversion driving.

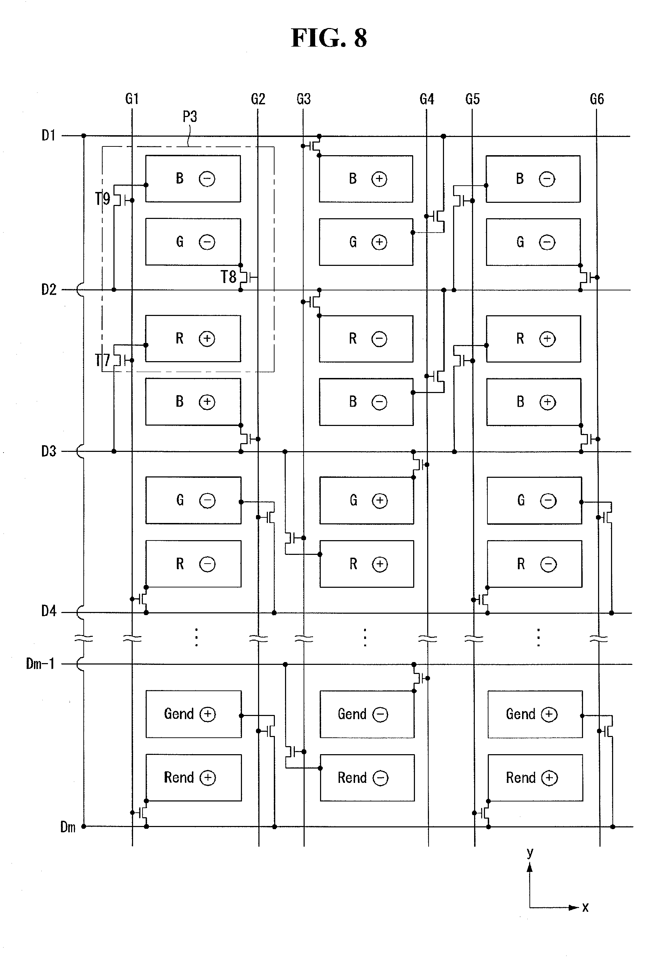

FIG. 8 is an equivalent circuit diagram illustrating a portion of pixel array according to a third embodiment of the invention. Referring to FIG. 8, data lines D1 to Dm are formed in a line direction (x-axis direction), and gate lines G1 to G6 are formed in a column direction (y-axis direction). Each of pixels of the display panel 10 includes a red subpixel R, a green subpixel G, and a blue subpixel B. Each of pixels of the display panel 10 is disposed parallel in a column direction in order of a blue subpixel B, a green subpixel G, and a red subpixel R, as shown in FIG. 8.

Subpixels of the same color are disposed parallel in a line direction. The red subpixels R are disposed parallel in a line direction in a 3r-th (r is a natural number) line. The green subpixels G are disposed parallel in a line direction in a (3r-1)st line. The blue subpixels B are disposed parallel in a line direction in a (3r-2)nd line. However, a disposition of the red subpixels R, the green subpixels G, and the blue subpixels B is not limited thereto and can be changed within a range that can be changed by those skilled in the art. Further, a line direction length of each of the red subpixels R, the green subpixels G, and the blue subpixels B is formed longer than a column direction length.

At least two subpixels of a red subpixel R, a green subpixel G, and a blue subpixel B of each of pixels share one data line. More particularly, in the third embodiment of the invention, a data line does not exist between a subpixel disposed at an odd number line and a subpixel disposed at an even number line adjacent in a column direction thereof. Therefore, a subpixel disposed at an even number line and a subpixel disposed at an odd number line adjacent in a column direction thereof share one of a data line adjacent to a subpixel disposed at an odd number line and a data line adjacent to a subpixel disposed at an even number line. As shown in FIG. 8, each of blue subpixels B of the first line and each of green subpixels G of a second line adjacent in a column direction share one of first and second data lines D1 and D2, and each of red subpixels R of a third line and each of blue subpixels B of a fourth line adjacent in a column direction share one of second and third data lines D2 and D3.

Further, a subpixel disposed at an odd number line and a subpixel disposed at an even number line alternately share one of a data line adjacent to a subpixel disposed at an odd number line and subpixel and a data line adjacent to a subpixel disposed at an even number line. As shown in FIG. 8, a blue subpixel B of the first line and a green subpixel G of a second line adjacent in a column direction in a first column share a second data line D2. The blue subpixel B of the first line and the green subpixel G of a second line adjacent in a column direction in a second column share the first data line D1. Further, a red subpixel R of a third line and a blue subpixel B of a fourth line adjacent in a column direction in the first column share a third data line D3. The red subpixel R of a third line and a blue subpixel B of a fourth line adjacent in the second column share a third data line D3.

Further, at least two subpixels of a red subpixel R, a green subpixel G, and a blue subpixel B of each of pixels charge a data voltage supplied in a time division manner through one data line. Hereinafter, a connection structure of a third pixel P3, a gate line, and a data line will be described with reference FIG. 8.

A TFT connected to a pixel electrode of a red subpixel R of the third pixel P3 is defined as a seventh TFT T7, a TFT connected to a pixel electrode of a green subpixel G is defined as an eighth TFT T8, and a TFT connected to a pixel electrode of a blue subpixel B is defined as a ninth TFT T9. The seventh TFT T7 supplies a red data voltage from the third data line D3 to a pixel electrode of the red subpixel R in response to the first gate pulse GP1 from the first gate line G1. A gate electrode of the seventh TFT T7 is connected to the first gate line G1, and a source electrode thereof is connected to a pixel electrode of the red subpixel R, and a drain electrode thereof is connected to the third data line D3. The eighth TFT T8 supplies a green data voltage from the second data line D2 to a pixel electrode of the green subpixel G in response to the second gate pulse GP2 from the second gate line G2. A gate electrode of the eighth TFT T8 is connected to the second gate line G2, a source electrode thereof is connected to a pixel electrode of the green subpixel G, and a drain electrode thereof is connected to the second data line D2. The ninth TFT T9 supplies a blue data voltage from the second data line D2 to a pixel electrode of the blue subpixel B in response to the first gate pulse GP1 from the first gate line G1. A gate electrode of the ninth TFT T9 is connected to the first gate line G1, a source electrode thereof is connected to a pixel electrode of the blue subpixel B, and a drain electrode thereof is connected to the second data line D2.

Finally, in a liquid crystal display comprising pixel array according to the third embodiment of the invention, because data lines D are formed in a line direction (x-axis direction), the number of source drive ICs can be reduced. For example, in a liquid crystal display of 1366x738 resolution, in case of a liquid crystal display in which data lines D are formed in a column direction (y-axis direction), 4098 (1366x3) data lines D are formed, and in order to control 4098 data lines D, at least 3 source drive ICs are necessary. However, in a liquid crystal display according to the invention in which data lines D are formed in a line direction (x-axis direction), because subpixels of an odd number line and subpixels of an even number line share data lines D, 1152 (738x3/2) data lines are formed. Therefore, in a liquid crystal display according to the third embodiment of the invention, because 1536 (738x2) data lines are formed, 1152 data lines D can be fully controlled with only one or two source drive ICs. Therefore, in a liquid crystal display according to the third embodiment of the invention, because the number of source drive ICs can be reduced, a cost can be reduced.

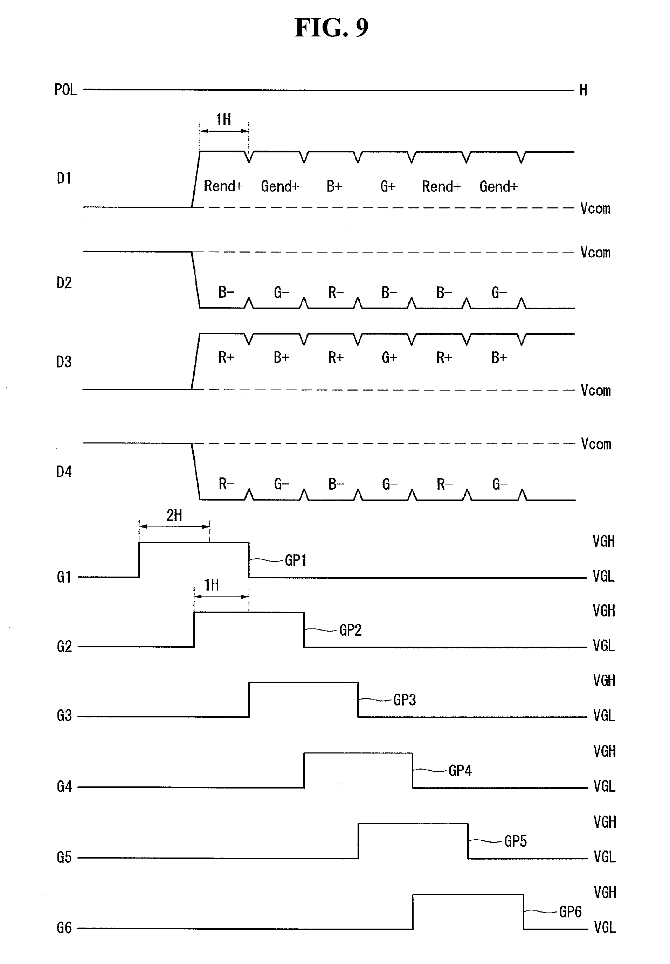

In order to reduce deterioration and an afterimage of liquid crystal and to reduce power consumption, pixel array according to the third embodiment of the invention is embodied with vertical two dot inversion, as shown in FIG. 8. Hereinafter, vertical two dot inversion driving of pixel array according to the third embodiment of the invention will be described in detail with reference to FIG. 9.

FIG. 9 is a waveform diagram illustrating a data voltage and a gate pulse for embodying vertical two dot inversion of FIG. 8. FIG. 9 illustrates a polarity control signal POL for periodically inverting polarity of a data voltage supplied through data lines D, a waveform of a data voltage supplied to first to m-th data lines D1-Dm, and a waveform of a gate pulse supplied to first to sixth gate lines G1-G6.

A source drive IC inverts polarity of a data voltage supplied to data lines D1-Dm in response to a polarity control signal POL per one frame. For example, a polarity control signal POL may be generated in a high level voltage H in an odd number frame period and in a low level voltage L in an even number frame period. FIG. 9 illustrates that a polarity control signal POL is generated in a high level voltage H.

Odd number data lines such as first and third data lines D1 and D3 supply positive polarity data voltages of a level higher than a common voltage Vcom as a DC in an odd number frame period. Even number data lines such as second and fourth data lines D2 and D4 supply negative polarity data voltages of a level lower than a common voltage Vcom as a DC in an odd number frame period. Odd number data lines such as the first and third data lines D1 and D3 supply negative polarity data voltages of a level lower than a common voltage Vcom as a DC in an even number frame period. Even number data lines such as the second and fourth data lines D2 and D4 supply positive polarity data voltages of a level higher than a common voltage Vcom as a DC in an even number frame period.

In order to compensate an insufficient pixel charge time, the gate driving circuit 110 sequentially supplies gate pulses having a pulse width more than two horizontal periods 2H to gate lines G1-G4. The gate pulses are overlapped by predetermined period. For example, the pulse width of gate pulse may be approximately two horizontal periods 2H. In this case, the gate pulses may be overlapped by approximately one horizontal period 1H. One horizontal period is one line scanning time in which data are written in pixels of one display line in the liquid crystal display panel 10. Each of subpixels precharges a data voltage for first one horizontal period of a gate pulse and charges a data voltage to display for next one horizontal period. Each of subpixels sustains a charged data voltage for one frame period. For example, as shown in FIG. 8, a green subpixel G of a third pixel P3 precharges a green data voltage B- for first one horizontal period of a second gate pulse GP2 of a second gate line G2 and charges a green data voltage G- to display for next one horizontal period.

Referring to FIGS. 8 and 9, polarity of data voltages simultaneously supplied to odd number data lines such as first and third data lines D1 and D3 and even number data lines such as second and fourth data lines D2 and D4 is different. Polarity of data voltages simultaneously supplied to odd number data lines such as the first and third data lines D1 and D3 and even number data lines such as the second and fourth data lines D2 and D4 is inverted in a cycle of one frame period. As a result, pixel array of FIG. 8 is driven with vertical two dot inversion. The liquid crystal display according to the third embodiment of the invention can reduce deterioration and an afterimage of liquid crystal due to vertical two dot inversion driving.

Further, the liquid crystal display according to third embodiment of the invention supplies data voltages as a DC to odd number data lines such as the first and third data lines D1 and D3 and even number data lines such as the second and fourth data lines D2 and D4. As a result, the liquid crystal display according to third embodiment of the invention can remarkably reduce power consumption P. The power consumption P is defined by Equation 1.

The power consumption P is proportional to a magnitude of a frequency f and an effective voltage V, and when driven with an AC, the frequency f increases, and when a positive polarity data voltage is transited to a negative polarity data voltage or when a negative polarity data voltage is transited to a positive polarity data voltage, the effective voltage V increases.

In a related art liquid crystal display, a data voltage of positive polarity and a data voltage of negative polarity swing about a common voltage Vcom per one horizontal period or two horizontal periods. The related art liquid crystal display has a high frequency f, and a magnitude of an effective voltage V thereof is from a negative polarity data voltage to a positive polarity data voltage. However, because the liquid crystal display according to third embodiment of the invention performs DC driving in a cycle of one frame period, the liquid crystal display has a low frequency f, and a magnitude of an effective voltage V thereof is from a common voltage to a positive polarity or negative polarity data voltage, as shown in FIG. 4. That is, a magnitude of an effective voltage V of a liquid crystal display according to third embodiment of the invention corresponds to 50% of that of the related art liquid crystal display, and a frequency f thereof is remarkably lower than that of the related art liquid crystal display. Therefore, the liquid crystal display according to third embodiment of the invention can greatly reduce power consumption P, compared with the related art liquid crystal display.

As described above, in the invention, data lines are formed in a line direction of a display panel, and gate lines are formed in a column direction. Further, subpixels of the invention share at least one gate line or one data line. As a result, in the invention, by reducing the number of source drive ICs, a cost can be reduced and readability of a clear type character can be improved. Further, in the invention, by reducing a gate line, an aperture ratio can increase.

Further, in the invention, subpixels of a display panel are driven in a dot inversion method, and a data voltage is applied as a DC to data lines. As a result, in the invention, power consumption can be remarkably reduced.

Further, in the invention, short sides of subpixels are formed parallel to data lines. As a result, in the invention, parasitic capacitance existing between subpixels and data lines can be minimized.

In various embodiments, a liquid crystal display is provided, which may include: a liquid crystal display panel comprising data lines formed in a line direction, gate lines formed in a column direction intersecting the line direction, and a plurality of pixels disposed in a matrix form in a cell area defined by the data lines and the gate lines; a data driving circuit for supplying a data voltage to the data lines; and a gate driving circuit for sequentially supplying gate pulses to the gate lines, wherein each of the pixels comprises subpixels, and a length of each of the subpixels in the column direction is greater than a length of each of the subpixels in the line direction, at least two subpixels of the subpixels share one gate line, and the at least two subpixels charge a data voltage, e.g. simultaneously charge a data voltage in response to a gate pulse from the one gate line.

In various embodiments, the subpixels of each of the pixels may be disposed parallel in the line direction, and subpixels of the same color may be disposed parallel in the column direction. In various embodiments, each of subpixels disposed at an odd number column and each of subpixels disposed at an even number column adjacent in a line direction may share a gate line existing therebetween. In various embodiments, polarity of a data voltage supplied to (4k-3)rd (k is a natural number) and 4k-th data lines is the same, and polarity of a data voltage supplied to (4k-2)nd and (4k-1)st data lines may be the same, and polarity of a data voltage supplied to the (4k-3)rd and 4k-th data lines and polarity of a data voltage supplied to the (4k-2)nd and (4k-1)st data lines may be opposite. In various embodiments, the data voltage supplied to the (4k-3)rd, (4k-2)nd, (4k-1)st, and 4k-th data lines may be inverted in a cycle of one frame period, and the data voltage may be supplied as a direct current (DC) to the (4k-3)rd, (4k-2)nd, (4k-1)st, and 4k-th data lines. In various embodiments, a pulse width of the gate pulse may be more than two horizontal periods. In various embodiments, a pulse width of an n-th (n is a natural number of 2 or more) gate pulse may be overlapped with that of an (n-1) st gate pulse by predetermined period.

Moreover, in various embodiments, a liquid crystal display is provided, which may include: a liquid crystal display panel comprising data lines formed in a line direction, gate lines formed in a column direction intersecting the line direction, and a plurality of pixels disposed in a matrix form in a cell area defined by the data lines and the gate lines; a data driving circuit for supplying a data voltage to the data lines; and a gate driving circuit for sequentially supplying gate pulses to the gate lines, wherein each of the pixels comprises subpixels, and a length of a line direction of each of the subpixels is longer than that of a column direction of each of the subpixels, at least two subpixels of the subpixels share one gate line, and the at least two subpixels charge a data voltage, e.g. supplied in a time division manner through the one data line.

In various embodiments, subpixels of each of the pixels may be disposed parallel in the column direction, and subpixels of the same color may be disposed parallel in the line direction. In various embodiments, each of subpixels disposed at an odd number column and each of subpixels disposed at an even number column adjacent in a column direction may share a data line existing therebetween. In various embodiments, polarity of a data voltage supplied to odd number data lines may be the same and polarity of a data voltage supplied to even number data lines may be the same, and polarity of a data voltage supplied to the odd number data lines and polarity of a data voltage supplied to the even number data lines may be opposite. In various embodiments, the data voltage supplied to the odd number and even number data lines may swing between a data voltage of positive polarity having a voltage level higher than a common voltage and a data voltage of negative polarity having a voltage level lower than the common voltage per predetermined period. In various embodiments, a subpixel disposed at an odd number line and a subpixel disposed at an even number line adjacent in a column direction from the subpixel disposed at the odd number line may share one of a data line adjacent to the subpixel disposed at the odd number line and a data line adjacent to the subpixel disposed at the even number line. In various embodiments, polarity of a data voltage supplied to odd number data lines may be the same and polarity of a data voltage supplied to even number data lines may be the same, and polarity of a data voltage supplied to the odd number data lines and polarity of a data voltage supplied to the even number data lines may be opposite. In various embodiments, the data voltage supplied to the odd number and even number data lines may be inverted in a cycle of one frame period, and the data voltage may be supplied as a DC to the odd number and even number data lines. In various embodiments, a pulse width of the gate pulse may be more than two horizontal periods. In various embodiments, a pulse width of an n-th (n is a natural number of 2 or more) gate pulse may be overlapped with that of an (n-1) th gate pulse by predetermined period.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A liquid crystal display comprising:

a liquid crystal display panel (10) comprising data lines (D) formed in a line direction, gate lines (G) formed in a column direction intersecting the line direction, and a plurality of pixels disposed in a matrix form in a cell area defined by the data lines (D) and the gate lines (G);
a data driving circuit (120) for supplying a data voltage to the data lines (D); and
a gate driving circuit (110) for sequentially supplying gate pulses to the gate lines (G),
wherein each of the pixels comprises subpixels, and a length of each of the subpixels in the column direction is greater than a length of each of the subpixels in the line direction,
at least two subpixels of the subpixels share one gate line (G), and the at least two subpixels charge a data voltage.

2. The liquid crystal display of claim 1, wherein the at least two subpixels simultaneously charge a data voltage in response to a gate pulse from the one gate line (G).

3. The liquid crystal display of any one of claims 1 or 2, wherein the subpixels of each of the pixels are disposed parallel in the line direction, and subpixels of the same color are disposed parallel in the column direction.

4. The liquid crystal display of any one of claims 1 or 3, wherein each of subpixels disposed at an odd number column and each of subpixels disposed at an even number column adjacent in a line direction share a gate line (G) existing therebetween.

5. The liquid crystal display of claim 4, wherein polarity of a data voltage supplied to (4k-3)rd (k is a natural number) and 4k-th data lines (D) is the same, and polarity of a data voltage supplied to (4k-2)nd and (4k-1) st data lines (D) is the same, and wherein polarity of a data voltage supplied to the (4k-3)rd and 4k-th data lines (D) and polarity of a data voltage supplied to the (4k-2)nd and (4k-1)st data lines (D) is opposite.

6. The liquid crystal display of claim 5, wherein the data voltage supplied to the (4k-3)rd, (4k-2)nd, (4k-1) st, and 4k-th data lines (D) is inverted in a cycle of one frame period, and wherein the data voltage is supplied as a direct current (DC) to the (4k-3)rd, (4k-2)nd, (4k-1)st, and 4k-th data lines (D).

7. The liquid crystal display of any one of claims 1 to 6, wherein a pulse width of the gate pulse is more than two horizontal periods, wherein preferably a pulse width of an n-th (n is a natural number of 2 or more) gate pulse is overlapped with that of an (n-1) st gate pulse by predetermined period.

8. The liquid crystal display of claim 1,
wherein the at least two subpixels charge a data voltage supplied in a time division manner through the one data line (D).

9. The liquid crystal display of claim 8,
wherein subpixels of each of the pixels are disposed parallel in the column direction, and
wherein subpixels of the same color are disposed parallel in the line direction.

10. The liquid crystal display of any one of claims 8 or 9,
wherein each of subpixels disposed at an odd number column and each of subpixels disposed at an even number column adjacent in a column direction share a data line (D) existing therebetween.

11. The liquid crystal display of claim 10, wherein polarity of a data voltage supplied to odd number data lines (D) is the same and polarity of a data voltage supplied to even number data lines (D) is the same, and polarity of a data voltage supplied to the odd number data lines (D) and polarity of a data voltage supplied to the even number data lines (D) is opposite, wherein preferably the data voltage supplied to the odd number and even number data lines (D) swings between a data voltage of positive polarity having a voltage level higher than a common voltage and a data voltage of negative polarity having a voltage level lower than the common voltage per predetermined period.

12. The liquid crystal display of any one of claims 8 to 11, wherein a subpixel disposed at an odd number line and a subpixel disposed at an even number line adjacent in a column direction from the subpixel disposed at the odd number line share one of a data line (D) adjacent to the subpixel disposed at the odd number line and a data line (D) adjacent to the subpixel disposed at the even number line.

13. The liquid crystal display of claim 12, wherein polarity of a data voltage supplied to odd number data lines (D) is the same and polarity of a data voltage supplied to even number data lines (D) is the same, and polarity of a data voltage supplied to the odd number data lines (D) and polarity of a data voltage supplied to the even number data lines (D) is opposite.

14. The liquid crystal display of claim 13, wherein the data voltage supplied to the odd number and even number data lines (D) is inverted in a cycle of one frame period, and
the data voltage is supplied as a DC to the odd number and even number data lines (D).

15. The liquid crystal display of any one of claims 8 to 14, wherein a pulse width of the gate pulse is more than two horizontal periods,
wherein preferably a pulse width of an n-th (n is a natural number of 2 or more) gate pulse is overlapped with that of an (n-1) th gate pulse by predetermined period.

# FIG. 1

# (Related Art)

No clear type                    Clear type

y

x

# FIG. 2

# FIG. 3

# FIG. 4

POL ————————————————————— H

1H

R+  B+  G+  R+  B+  G+

D4k-3 —————————————————— Vcom

D4k-2 —————————————————— Vcom

G−  R−  B−  G−  R−  B−

D4k-1 —————————————————— Vcom

R−  B−  G−  R−  B−  G−

G+  R+  B+  G+  R+  B+

D4k —————————————————— Vcom

2H

VGH

GP1

G1          VGL

1H

VGH

GP2

G2          VGL

VGH

GP3

G3          VGL

# FIG. 5

| Content | Pixel structure | Sub-pixel Image | | Font Image on screen | |
|---|---|---|---|---|---|
| | | No clear type | Clear type | No clear type | Clear type |
| Related art | R / B | A | A | Sub-pixel | Sub-pixel |
| First embodiment of the invention | R B | A | A | Sub-pixel | Sub-pixel |

# FIG. 6

# FIG. 7

# FIG. 8

# FIG. 9

POL ————————————————————————————————————————— H

D1

1H

Rend+  Gend+  B+  G+  Rend+  Gend+
Vcom

D2

Vcom
B−  G−  R−  B−  B−  G−

D3

R+  B+  R+  G+  R+  B+
Vcom

D4

Vcom
R−  G−  B−  G−  R−  G−

G1

2H

VGH
GP1
VGL

G2

1H

VGH
GP2
VGL

G3

VGH
GP3
VGL

G4

VGH
GP4
VGL

G5

VGH
GP5
VGL

G6

VGH
GP6
VGL

Europäisches
Patentamt
European
Patent Office
Office européen
des brevets

**EUROPEAN SEARCH REPORT**

Application Number

EP 11 18 6349

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 199 850 A1 (SAMSUNG ELECTRONICS CO LTD [KR]) 23 June 2010 (2010-06-23) * paragraph [0029] - paragraph [0059]; figures 1-3 * | 1-6 | INV. G09G3/36 |
| Y | US 2007/103631 A1 (MOON HONG M [KR] ET AL) 10 May 2007 (2007-05-10) * paragraph [0038] - paragraph [0039]; figure 3 * | 5,6 | |
| Y | US 2009/322659 A1 (CHAN TE-WEI [TW] ET AL) 31 December 2009 (2009-12-31) * paragraph [0094] - paragraph [0095]; figure 4 * | 5,6 | |
| Y | US 2006/197882 A1 (OH JOO-HAK [KR] ET AL OH JOON-HAK [KR] ET AL) 7 September 2006 (2006-09-07) * paragraph [0031] - paragraph [0048]; figures 1,2 * | 5,6 | |
| X | US 2010/085348 A1 (BAE HYEON-SEOK [KR] ET AL) 8 April 2010 (2010-04-08) * paragraph [0027] - paragraph [0048]; figures 1-4 * | 1,3,7 | TECHNICAL FIELDS SEARCHED (IPC) G09G |
| X | US 2005/231455 A1 (MOON SEUNG-HWAN [KR]) 20 October 2005 (2005-10-20) * paragraph [0033] - paragraph [0104]; figures 1-9B * | 1,8-15 | |

The present search report has been drawn up for all claims

| Place of search | Date of completion of the search | Examiner |
|---|---|---|
| Munich | 30 May 2012 | Harke, Michael |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

**Application Number**

EP 11 18 6349

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

**EP 2 506 246 A1**

Europäisches
Patentamt

European
Patent Office

Office européen
des brevets

**LACK OF UNITY OF INVENTION**
**SHEET B**

**Application Number**

EP 11 18 6349

The Search Division considers that the present European patent application does not comply with the requirements of unity of invention and relates to several inventions or groups of inventions, namely:

1. claims: 1-6

    The first invention concerns a liquid crystal display as claimed in claim 1, i.e. a liquid crystal display comprising: a liquid crystal display panel comprising data lines formed in a line direction, gate lines formed in a column direction intersecting the line direction, and a plurality of pixels disposed in a matrix form in a cell area defined by the data lines and the gate lines; a data driving circuit for supplying a data voltage to the data lines; and a gate driving circuit for sequentially supplying gate pulses to the gate lines, wherein
    each of the pixels comprises subpixels, and a length of each of the subpixels in the column direction is greater than a length of each of the subpixels in the line direction, at least two subpixels of the subpixels share one gate line, and the at least two subpixels charge a data voltage, wherein, as claimed in claim 5, polarity of a data voltage supplied to (4k-3)rd (k is a natural number) and 4k-th data lines (D) is the same, and polarity of a data voltage supplied to (4k-2)nd and (4k-1)st data lines (D) is the same, andwherein polarity of a data voltage supplied to the (4k-3)rd and 4k-th data lines (D) and polarity of a data voltage supplied to the (4k-2)nd and (4k-1)st data lines (D) is opposite.
    ---

2. claim: 7

    The second invention concerns a liquid crystal display as claimed in claim 1 (see the first invention for further details), wherein, as claimed in claim 7, a pulse width of the gate pulse is more than two horizontal periods,wherein preferably a pulse width of an n-th (n is a natural number of 2 or more) gate pulse is overlapped with that of an (n-1)st gate pulse by predetermined period.
    ---

3. claims: 8-15

    The third invention concerns a liquid crystal display as claimed in claim 1 (see the first invention for further details), wherein, as claimed in claim 8, at least two subpixels charge a data voltage supplied in a time division manner through the one data line.
    ---

24

## ANNEX TO THE EUROPEAN SEARCH REPORT
## ON EUROPEAN PATENT APPLICATION NO.

EP 11 18 6349

This annex lists the patent family members relating to the patent documents cited in the above-mentioned European search report.
The members are as contained in the European Patent Office EDP file on
The European Patent Office is in no way liable for these particulars which are merely given for the purpose of information.

30-05-2012

| Patent document cited in search report | | Publication date | Patent family member(s) | | Publication date |
|---|---|---|---|---|---|
| EP 2199850 | A1 | 23-06-2010 | EP 2199850 A1 | | 23-06-2010 |
| | | | JP 2010145996 A | | 01-07-2010 |
| | | | KR 20100070744 A | | 28-06-2010 |
| | | | US 2010156771 A1 | | 24-06-2010 |
| US 2007103631 | A1 | 10-05-2007 | KR 20070049923 A | | 14-05-2007 |
| | | | US 2007103631 A1 | | 10-05-2007 |
| US 2009322659 | A1 | 31-12-2009 | TW 201001038 A | | 01-01-2010 |
| | | | US 2009322659 A1 | | 31-12-2009 |
| | | | US 2010240273 A1 | | 23-09-2010 |
| US 2006197882 | A1 | 07-09-2006 | KR 20060096586 A | | 13-09-2006 |
| | | | US 2006197882 A1 | | 07-09-2006 |
| | | | US 2009316101 A1 | | 24-12-2009 |
| US 2010085348 | A1 | 08-04-2010 | KR 20100039633 A | | 16-04-2010 |
| | | | US 2010085348 A1 | | 08-04-2010 |
| US 2005231455 | A1 | 20-10-2005 | CN 1691101 A | | 02-11-2005 |
| | | | JP 2005309437 A | | 04-11-2005 |
| | | | KR 20050101672 A | | 25-10-2005 |
| | | | US 2005231455 A1 | | 20-10-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020110030323